# FASCICULE DE BREVET EUROPEEN

(11) **EP 2 090 796 B1**
(45) Date de publication et mention de la délivrance du brevet: **07.05.2014**
(21) Numéro de dépôt: 09152015.5
(22) Date de dépôt: 04.02.2009
(51) Int. Cl.: F16D 23/02

(54) **Dispositif de synchronisation multi-cones pour boîte de vitesses**
Vorrichtung zur Mehrfachkegel-Synchronisierung für Schaltgetriebe
Multi-cone synchronisation device for a gearbox

(30) Priorité: 12.02.2008 FR 0850856
(43) Date de publication de la demande: 19.08.2009
(73) Titulaire: PEUGEOT CITROËN AUTOMOBILES S.A., 78140 Vélizy Villacoublay (FR)
(72) Inventeur: Wascheul, Michael, 78260 Achères (FR); Lelasseux, Xavier, 92150 Suresnes (FR)

(56) Documents cités:
- EP-A- 1 887 240
- DE-U1- 29 920 027
- JP-A- 8 200 396
- US-A- 4 811 825
- US-A- 5 560 461

## Description

La présente invention concerne des synchroniseurs multi-cônes comportant plusieurs surfaces coniques de frottement superposées, en particulier pour boîte de vitesses de véhicules automobiles.

Les boîtes de vitesses manuelles des véhicules automobiles comportent un arbre primaire lié au moteur du véhicule par un embrayage, et des arbres parallèles récepteurs liés aux roues motrices du véhicule. L'arbre primaire peut être relié à chaque arbre récepteur par des couples de pignons, chaque couple formant un engrenage transmettant le mouvement d'un arbre à l'autre suivant différents rapports de démultiplication correspondant respectivement à autant de rapports de vitesse.

Un des pignons de chaque engrenage est solidaire de l'arbre le supportant, l'autre pignon de l'engrenage monté libre en rotation, peut être rendu solidaire de son arbre par un dispositif comprenant par exemple un crabot, après une opération de synchronisation des vitesses au moyen d'un synchroniseur.

Un dispositif connu de synchronisation comporte plusieurs bagues coniques de frottement qui se superposent, ces bagues étant alternativement liées en rotation d'un côté à un moyeu entraîné par l'arbre, et de l'autre côté au pignon libre. Les bagues peuvent être garnies de matériaux de frottement, sur au moins une des faces en contact, pour augmenter le coefficient de frottement.

Un manchon de synchronisation enserre ce synchroniseur, il comporte des cannelures internes permettant un coulissement axial et un entraînement en rotation par le moyeu, et une gorge circulaire externe recevant les doigts d'une fourchette de commande, pour transmettre une pression axiale.

Le manchon de synchronisation comporte de plus un alésage conique interne qui s'adapte sur la bague conique radialement extérieure. De cette manière par un coulissement axial du manchon, son alésage conique vient presser sur la surface conique correspondante de la bague conique extérieure, cette bague se déplaçant aussi presse à son tour successivement sur l'empilage de bagues coniques, jusqu'à la bague radialement intérieure.

On transmet ainsi sensiblement la même charge axiale sur toutes les surfaces de frottement de chaque bague conique, ce qui génère au niveau de chaque frottement un couple d'entraînement entre les bagues coniques, d'autant plus élevé que l'angle du cône est faible.

La somme de ces couples d'entraînement forme un couple de synchronisation dépendant du nombre de surfaces de frottement, qui permet de synchroniser des composants libres en rotation, ou même de transmettre un certain couple moteur aux roues du véhicule pendant une phase de synchronisation.

Le document FR2923879 décrit un tel dispositif. Il présente des anneaux coniques comportant axialement sur les côtés des tocs d'entraînement qui s'ajustent dans des fentes ou des ouvertures du moyeu d'entraînement et du pignon libre, pour assurer une liaison en rotation. Ces tocs comportent des faces latérales d'appui inclinées par rapport à l'axe, pour obtenir une composante d'effort axial sur la bague, lors de la transmission d'un couple.

Un dispositif similaire est connu du document DE29920027.

Dans une variante connue, ce dispositif de synchronisation peut comprendre deux empilages de bagues de synchronisation disposés symétriquement de part et d'autre du moyeu de synchronisation, et reliés chacun à un pignon libre. De cette manière un même manchon de synchronisation coulissant axialement dans un sens ou dans l'autre, peut activer l'un ou l'autre de ces synchroniseurs.

Pratiquement pour simplifier la fabrication, on peut prévoir un moyeu de synchronisation comportant des jeux d'ouvertures débouchant de part en part, pour recevoir d'un côté ou de l'autre les tocs d'entraînement des bagues coniques. De plus des pentes latérales de ces ouvertures correspondent à celles des tocs d'entraînement pour obtenir un bon appui transmettant le couple.

Pour une fabrication en série standardisée, il est intéressant de prévoir des bagues de synchronisation identiques d'un côté et de l'autre du moyeu. Le problème alors est que l'on a un risque d'erreur au montage, l'opérateur introduisant les tocs d'une bague de synchronisation dans le jeu d'ouvertures correspondant à la bague axialement de l'autre côté, ce qui entraînerait un mauvais fonctionnement du synchroniseur et de la boîte de vitesses, les pentes latérales des ouvertures ne correspondant pas.

La présente invention a notamment pour but d'éviter ces inconvénients de la technique antérieure, et de proposer un procédé simple et efficace qui permette d'éviter une erreur de montage des bagues de synchronisation.

Elle propose à cet effet un synchroniseur multi-cônes en particulier pour boîte de vitesses automobile, conforme à l'objet de la revendication 1.

Un avantage du synchroniseur multi-cônes selon l'invention, est qu'en réalisant deux jeux d'ouvertures sur le moyeu correspondant à chaque série de tocs, chaque jeu d'ouvertures comportant des côtés latéraux suivant une pente s'ajustant sur celle des tocs, le côté du toc élargi de manière dissymétrique empêche de manière simple et efficace, une mise en place des tocs de la bague conique dans le mauvais jeu d'ouvertures.

Le synchroniseur selon l'invention peut en outre comporter une ou plusieurs des caractéristiques suivantes, qui peuvent être combinées entre elles.

Selon une disposition particulière, chaque bague comporte deux tocs standard et un toc élargi d'un seul côté.

Avantageusement, les jeux d'ouvertures pour deux bagues coniques symétriques de part et d'autre du moyeu, sont angulairement répartis de manière régulière, l'un par rapport à l'autre.

Avantageusement, une même ouverture du moyeu reçoit deux tocs venant de deux bagues superposées.

Selon une disposition particulière, chaque empilage de bagues coniques comprend quatre bagues liées au moyeu, disposées par groupe de deux bagues utilisant un même jeu d'ouvertures du moyeu, ces différents jeux d'ouvertures étant angulairement répartis de manière régulière les uns par rapport aux autres.

Avantageusement, le moyeu est réalisé en poudre métallique frittée.

L'invention comprend aussi une boîte de vitesses à crabots, comportant différents rapports de vitesses réalisés par des engrenages comprenant des pignons, comportant au moins un dispositif double de synchronisation sur deux rapports de vitesses, permettant de transmettre un couple moteur, caractérisé en ce que ce dispositif double de synchronisation est réalisé suivant l'une quelconques des caractéristiques précédentes.

L'invention sera mieux comprise et d'autres caractéristiques et avantages apparaîtront plus clairement à la lecture de la description ci-après donnée à titre d'exemple, en référence aux dessins annexés dans lesquels :
- la figure 1 présente en demi coupe axiale, un arbre de boîte de vitesses comportant deux synchroniseurs selon l'art antérieur, liés à deux pignons ;
- la figure 2 présente en perspective, une vue du moyeu et des empilages de bagues coniques ;
- la figure 3 présente en perspective, une vue de détail d'un toc en prise dans une ouverture ; et
- la figure 4 présente en perspective, une vue d'une bague conique et d'un moyeu selon l'invention.

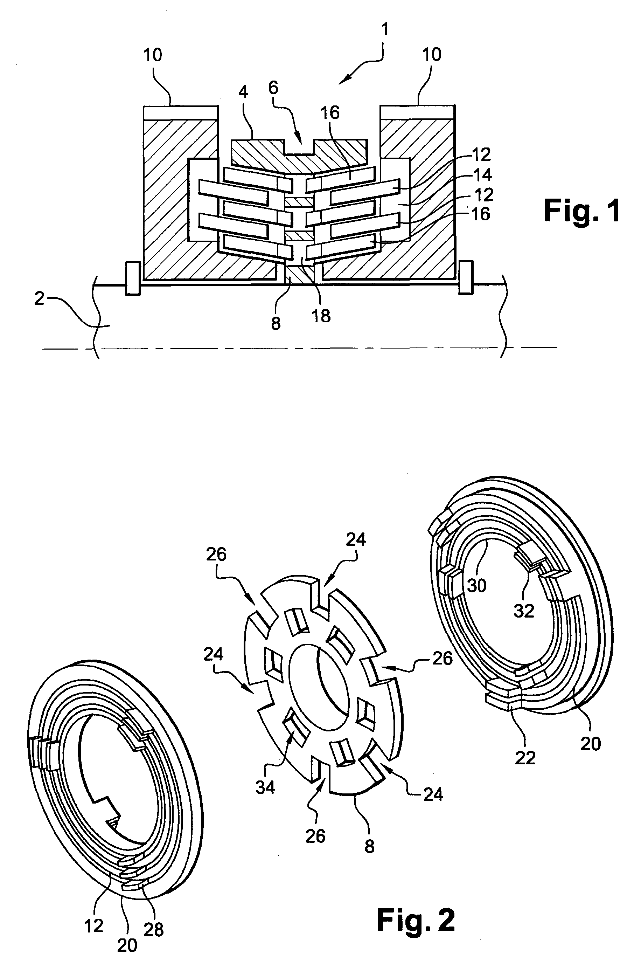

La figure 1 présente un dispositif de synchronisation double 1 comportant un moyeu central 8 lié en rotation à un arbre 2, et supportant sur son diamètre externe un manchon de synchronisation 4, entraînée par des cannelures axiales permettant un coulissement sous l'effet d'une fourchette de commande en prise dans une rainure circulaire extérieure 6.

Deux pignons 10 de diamètre différent sont montés libre en rotation axialement de part et d'autre du moyeu 8, pour transmettre un couple suivant deux rapports à un arbre parallèle non représenté.

Un empilage de bagues coniques 12, 16 centrées sur l'axe et dont le cône est faiblement ouvert, est disposé entre le moyeu 8 et chaque pignon 10. Chaque empilage comporte deux bagues 12 liées au pignon 10, dont les faces tournées vers les pignons comprennent des tocs d'entraînement, ajustés dans des rainures latérales du pignon correspondant. Ces empilages comportent aussi disposées alternativement, trois bagues 16 liées au moyeu 8, dont les faces tournées vers le moyeu comportent des tocs d'entraînement ajustés dans des ouvertures 18 de ce moyeu.

Un coulissement axial du manchon 4, applique par son alésage conique interne, une force de serrage sur la première bague conique 16 radialement extérieure, ce serrage étant communiqué à l'empilage de bagues coniques. On applique ainsi sur les quatre surfaces de frottement, une pression qui génère un couple d'entraînement du pignon 10 correspondant.

La figure 2 montre une variante de réalisation d'un double synchroniseur. Le moyeu 8 comporte un voile radial comprenant des ouvertures sensiblement carrées, qui traversent de part en part ce voile.

Chaque bague conique 20, 30 comporte trois tocs répartis angulairement de manière régulière.

L'empilage de bagues coniques comporte deux bagues externes 20 liées au moyeu 8, dont les tocs d'entraînement 22 radialement alignés s'emboîtent dans une même fenêtre externe 24 du moyeu, cette fenêtre débouchant vers l'extérieur. De même, l'empilage comporte deux bagues internes 30 liées au moyeu 8, dont les tocs d'entraînement 32 radialement alignés s'emboîtent dans une même fenêtre interne 34 du moyeu.

L'empilage de bagues coniques comporte de plus trois bagues 12 liées au pignon 10, disposées alternativement avec les quatre premières bagues 20, 30, et dont les tocs d'entraînement 28 radialement alignés s'emboîtent dans une rainure radiale du pignon.

On notera que chaque bague conique comporte trois tocs, et que les deux empilages de bagues sont identiques, étant simplement retournés l'un par rapport à l'autre. Les tocs de ces deux empilages sont décalés angulairement de 60°, ce qui permet de répartir régulièrement les ouvertures 24, 26 sur le moyeu 8.

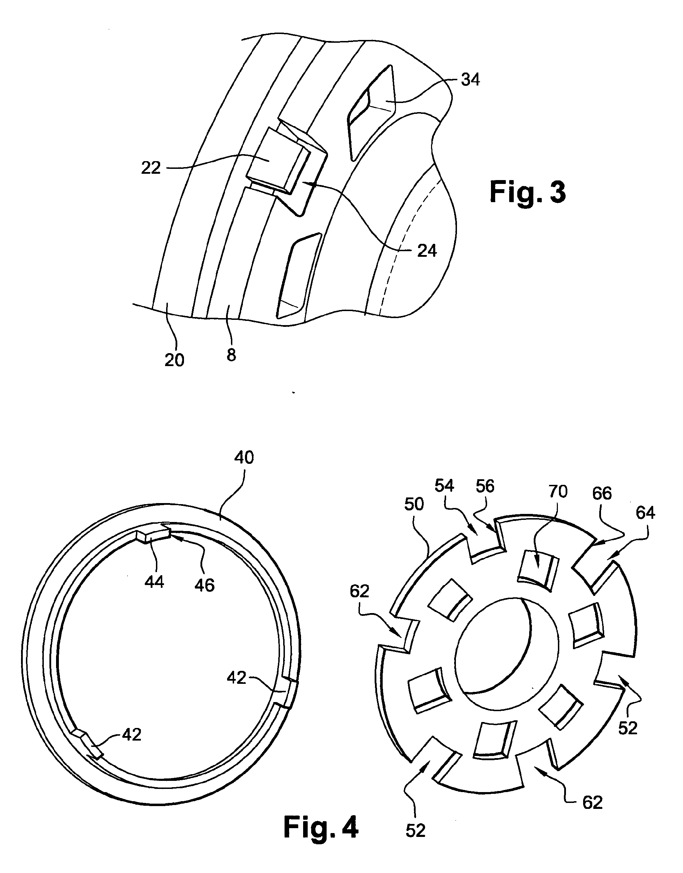

La figure 3 présente en détail un toc 22 d'une bague conique radialement extérieure 20 liée au moyeu 8, ce toc comportant des faces latérales d'appui inclinées par rapport à l'axe, qui s'ajustent sur les faces correspondantes des ouvertures 24, inclinées suivant le même angle pour répartir l'effort d'appui. De cette manière la transmission d'un couple génère une force axiale au niveau des faces inclinées des différents tocs, qui s'ajoute à l'effort axial du manchon 4 pour serrer l'empilage de bagues coniques.

Un risque avec ce montage, les ouvertures 24, 26 étant également réparties sur le moyeu 8, est que l'opérateur inverse les ouvertures, utilisant les ouvertures 24, 26 prévues pour un côté, pour monter des bagues de l'autre côté, éventuellement en forçant pour faire rentrer les tocs. Dans ce cas les faces inclinées des ouvertures 24, 26 ne sont plus ajustées sur celles des tocs 22, et le fonctionnement du synchroniseur est défectueux.

La figure 4 présente une bague conique radialement externe 40, comportant trois tocs répartis de manière régulière, deux tocs 42 sont identiques, le troisième 44 comprenant seulement une face latérale d'appui 46 décalées angulairement vers l'extérieur.

De même, le moyeu 50 comporte trois ouvertures réparties de manière régulière, deux ouvertures 52 sont identiques, la troisième 54 comprenant aussi une face latérale d'appui 56 décalées angulairement vers l'extérieur, pour recevoir le toc correspondant 44.

De cette manière la face latérale décalée 46 du toc 44, ne peut rentrer sur un côté du moyeu 50 que dans le bon jeu d'ouvertures 52, 54 prévu à cet effet, ce décalage empêchant une introduction dans l'autre jeu qui comporte aussi une ouverture 64 avec une face latérale d'appui 66 décalée, mais qui par symétrie est décalée suivant l'autre sens de rotation.

De la même manière, la bague conique symétrique située de l'autre côté du moyeu 50, ne peut être montée que dans le bon jeu d'ouvertures 62, 64.

Il en est de même pour les autres bagues coniques, qui utilisent les mêmes ouvertures ou des ouvertures radialement intérieures 70. On réalise ainsi de manière simple et économique, un détrompage efficace qui évite tout risque d'erreur au montage des bagues coniques.

Selon un mode de réalisation, chaque empilage de bagues coniques comprend quatre bagues liées au moyeu 50, disposées par groupe de deux bagues, chaque groupe utilisant un même jeu d'ouvertures du moyeu ce qui permet de limiter leur nombre.

De plus, les différents jeux d'ouvertures sont angulairement décalés les uns par rapport aux autres de manière régulière, pour obtenir une bonne résistance du moyeu.

Avantageusement, le moyeu 50 peut être réalisé à partir de poudres métalliques frittées permettant de former facilement des ouvertures avec les pentes latérales, et les bagues coniques peuvent être réalisées par tournage.

Une utilisation intéressante du double synchroniseur suivant l'invention, est sur une boîte de vitesses à crabots comportant différents rapports de vitesses réalisés par des engrenages formés par des pignons portés par des arbres parallèles, cette boîte de vitesses comportant au moins un dispositif double de synchronisation sur deux rapports de vitesses différents, permettant de synchroniser des vitesses d'arbres tout en transmettant un couple moteur aux roues motrices du véhicule.

## Revendications

1. Synchroniseur multi-cônes en particulier pour boîte de vitesses automobile, comportant un moyeu (50) solidaire d'un arbre (2) portant deux pignons libres (10) disposés axialement de part et d'autre du moyeu, et deux empilages identiques de bagues coniques disposés entre chaque pignon libre et le moyeu, comprenant dans l'ordre de l'empilage, des bagues alternativement liées en rotation au moyeu ou au pignon, chaque empilage pouvant être serré par le coulissement axial d'un manchon (4) qui les entoure, dans lequel chaque bague (40) liée au moyeu (50) comporte une série de tocs d'entraînement (42, 44) répartis régulièrement et s'ajustant dans des jeux d'ouvertures traversantes (52, 54) correspondantes du moyeu, lesdits tocs (42, 44) et jeux d'ouvertures traversantes (52, 54) ayant des faces latérales d'appui inclinées par rapport à l'axe de l'arbre, afin d'obtenir une composante d'effort axial sur la bague, **caractérisé en ce qu'**un de ces tocs (44) et l'ouverture traversante (54) correspondante du moyeu étant rallongés par rapport aux autres tocs (42) et ouvertures (52) suivant un sens de rotation de l'arbre (2), se distinguant géométriquement des autres tocs (42) et ouvertures (52) de manière dissymétrique.

2. Synchroniseur multi-cônes suivant la revendication 1, **caractérisé en ce que** chaque bague (40) comporte deux tocs standard (42), et un toc (44) dissymétriquement rallongé.

3. Synchroniseur multi-cônes suivant la revendication 1 ou 2 **caractérisé en ce que** les jeux d'ouvertures pour deux bagues coniques (40) symétriques de part et d'autre du moyeu (50), sont angulairement répartis de manière régulière l'un par rapport à l'autre.

4. Synchroniseur multi-cônes suivant l'une des revendications précédentes, **caractérisé en ce qu'**une même ouverture (52, 54) du moyeu (50), reçoit deux tocs (42, 44) venant de deux bagues superposées.

5. Synchroniseur multi-cônes suivant la revendication 4, **caractérisé en ce que** chaque empilage de bagues coniques comprend quatre bagues liées au moyeu (50), disposés par groupe de deux bagues utilisant un même jeu d'ouvertures du moyeu, ces différents jeux d'ouvertures étant angulairement répartis de manière régulière les uns par rapport aux autres.

6. Synchroniseur multi-cônes suivant l'une quelconque des revendications précédentes, **caractérisé en ce que** le moyeu (50) est réalisé en poudre métallique frittée.

7. Boîte de vitesses à crabots, comportant différents rapports de vitesses réalisés par des engrenages comprenant des pignons, comportant au moins un dispositif double de synchronisation sur deux rapports de vitesses, permettant de transmettre un couple moteur, **caractérisé en ce que** ce dispositif double de synchronisation est réalisé suivant l'une quelconques des revendications précédentes.

## Patentansprüche

1. Mehrfachkegel-Synchronisierung, insbesondere für Kraftfahrzeug-Schaltgetriebe, die eine Nabe (50) aufweist, die fest mit einer Welle (2) verbunden ist, die zwei freie Ritzel (10) aufweist, die axial auf jeder Seite der Nabe angeordnet sind, und zwei identische Stapelungen von Kegelhülsen, die zwischen jedem freien Ritzel und der Nabe angeordnet sind, die in der Reihenfolge der Stapelung Hülsen aufweist, die abwechselnd in Drehung mit der Nabe oder mit dem Ritzel verbunden sind, wobei jede Stapelung durch axiales Gleiten einer Muffe (4), die sie umgibt, gespannt werden kann, wobei jede Hülse (40), die mit der Nabe (50) verbunden ist, eine Reihe von Antriebsmitnehmern (42, 44) aufweist, die regelmäßig verteilt sind und sich in entsprechenden Sätzen durchgehender Öffnungen (52, 54) der Nabe anpassen, wobei die Antriebsmitnehmern (42, 44) und Sätze durchgehender Öffnungen (52, 54) seitliche Auflageflächen haben, die in Bezug auf die Achse der Welle geneigt sind, um eine axiale Kraftkomponente auf der Hülse zu erzielen, **dadurch gekennzeichnet, dass** diese Antriebsmitnehmer (44) und die entsprechende durchgehende Öffnung (54) der Nabe in Bezug auf andere Antriebsmitnehmer (42) und Öffnungen (52) entlang einer Drehrichtung der Welle (2) verlängert sind, sich geometrisch von den anderen Antriebsmitnehmern (42) und Öffnungen (52) unsymmetrisch unterscheiden.

2. Mehrfachkegel-Synchronisierung nach Anspruch 1, **dadurch gekennzeichnet, dass** jede Hülse (40) zwei Standard-Antriebsmitnehmer (42) und einen unsymmetrischen verlängerten Antriebsmitnehmer (44) aufweist.

3. Mehrfachkegel-Synchronisierung nach Anspruch 1 oder 2, **dadurch gekennzeichnet, dass** die Öffnungssätze für zwei symmetrische Kegelhülsen (40) auf jeder Seite der Nabe (50) winkelig regelmäßig zueinander verteilt sind.

4. Mehrfachkegel-Synchronisierung nach einem der vorhergehenden Ansprüche, **dadurch gekennzeichnet, dass** ein und dieselbe Öffnung (52, 54) der Nabe (50) zwei Antriebsmitnehmer (42, 44), die von zwei übereinander liegenden Hülsen kommen, aufnimmt.

5. Mehrfachkegel-Synchronisierung nach Anspruch 4, **dadurch gekennzeichnet, dass** jede Stapelung von Kegelhülsen vier Hülsen aufweist, die mit der Nabe 50 verbunden sind, die in Gruppen zu zwei Hülsen, die ein und denselben Öffnungssatz der Nabe verwenden, angeordnet sind, wobei diese unterschiedlichen Öffnungssätze winkelig regelmäßig zueinander verteilt sind.

6. Mehrfachkegel-Synchronisierung nach einem der vorhergehenden Ansprüche, **dadurch gekennzeichnet, dass** die Nabe (50) aus gesintertem Metallpulver hergestellt ist.

7. Klauen-Schaltgetriebe, das unterschiedliche Gänge aufweist, die aus Zahnradgetrieben bestehen, die Ritzel aufweisen, die mindestens eine doppelte Synchronisierungsvorrichtung auf zwei Gängen aufweisen, die es erlauben, ein Motorantriebsmoment zu übertragen, **dadurch gekennzeichnet, dass** diese doppelte Synchronisierungsvorrichtung nach einem der vorhergehenden Ansprüche hergestellt ist.

## Claims

1. A multi-cone synchronizer in particular for a motor vehicle gearbox, comprising a hub (50) integral with a shaft (2) carrying two free gears (10) disposed axially on either side of the hub, and two identical stacks of conical rings disposed between each free gear and the hub, including in the order of stacking, rings alternately connected in rotation to the hub or to the gear, each stack being able to be tightened by the axial sliding of a sleeve (4) which surrounds them, in which each ring (40) connected to the hub (50) comprises a series of driving dogs (42, 44) distributed regularly and accommodating themselves in sets of corresponding traversing openings (52, 54) of the hub, said dogs (42, 44) and sets of traversing openings (52, 54) having lateral support faces inclined with respect to the axis of the shaft, so as to obtain an axial force component on the ring, **characterized in that** one of these dogs (44) and the corresponding traversing opening (54) of the hub being extended with respect to the other dogs (42) and openings (52) along a rotation direction of the shaft (2), distinguishing themselves geometrically from the other dogs (42) and openings (52) in an unsymmetrical manner.

2. The multi-cone synchronizer according to Claim 1, **characterized in that** each ring (40) comprises two standard dogs (42) and one unsymmetrically extended dog (44).

3. The multi-cone synchronizer according to Claim 1 or 2, **characterized in that** the sets of openings for two symmetrical conical rings (40) on either side of the hub (50) are distributed angularly in a regular manner one with respect to the other.

4. The multi-cone synchronizer according to one of the preceding claims, **characterized in that** the same opening (52, 54) of the hub (50) receives two dogs (42, 44) coming from two superimposed rings.

5. The multi-cone synchronizer according to Claim 4, **characterized in that** each stack of conical rings includes four rings connected to the hub (50), disposed per group of two rings using a same set of openings of the hub, these different sets of openings being angularly distributed in a regular manner with respect to one another.

6. The multi-cone synchronizer according to any one of the preceding claims, **characterized in that** the hub (50) is made from sintered metallic powder.

7. A dog clutch gearbox, comprising various gear ratios realized by gearings including gears, comprising at least one double synchronisation device on two gear ratios, permitting the transmission of an engine torque, **characterized in that** this double synchronisation device is realized according to any one of the preceding claims.
